# EUROPÄISCHE PATENTSCHRIFT

(11) **EP 1 035 795 B1**
(45) Veröffentlichungstag und Bekanntmachung des Hinweises auf die Patenterteilung: **08.05.2002**
(21) Anmeldenummer: 98956895.1
(22) Anmeldetag: 29.10.1998
(51) Int. Cl.: A47L 13/50, B62B 3/10

(54) **TRANSPORTWAGEN FÜR REINIGUNG UND WERTSTOFFENTSORGUNG**
TRANSPORT CART FOR CLEANING AND COLLECTING RECYCLABLE WASTE
CHARIOT DE TRANSPORT POUR LE NETTOYAGE ET LA RECUPERATION DE DECHETS RECYCLABLES

(30) Priorität: 07.11.1997 DE 19749206
(43) Veröffentlichungstag der Anmeldung: 20.09.2000
(73) Patentinhaber: HENKEL-ECOLAB GmbH & CO. OHG, 40589 Düsseldorf (DE)
(72) Erfinder: KRESSE, Frank, D-40723 Hilden (DE); BANSEMIR, Klaus-Peter, D-40764 Langenfeld (DE); FAUBEL, Heiko, D-42929 Hermelskirchen (DE)
(74) Vertreter: Foitzik, Joachim Kurt
(86) Internationale Anmeldenummer: EP9806867
(87) Internationale Veröffentlichungsnummer: WO9923931

(56) Entgegenhaltungen:
- DE-U- 9 307 792
- DE-U- 9 402 552
- FR-A- 2 569 151
- FR-A- 2 732 937
- US-A- 5 507 507

## Beschreibung

Die Erfindung betrifft einen Reinigungswagen zur Aufnahme und Beförderung von Behältern und Utensilien für Reinigungs-, Ver- und Entsorgungszwecke, mit einem auf Rollen befestigten Grundrahmen und darauf angeordneten stufenförmigen Stützrahmen für horizontal und vertikal zueinander versetzte Trägerelemente und einem hinter dem Stützrahmen angeordneten Einhängebehälter.

Die gewerbliche Reinigung im allgemeinen und ganz besonders im Krankenhausund Pflegebereich ist sehr vielschichtig. Sie umfaßt Naß- und Trockenbehandlung von Vertikal- und Horizontalflächen sowie Sanitärbereichen. Außerdem wird dabei zunehmend auch die fraktionierte Entsorgung von Abfall und wiederverwertbaren Materialien und eine Neubestückung mit Verbrauchsgütern gefordert. Derartige Funktionen sind mit dem Transport großer und gewichtiger Mengen an Geräten und Utensilien verbunden, der wirtschaftlich nur noch mit Transport- und Handlingsystemen bewältigt werden kann, die auf die erforderlichen Funktionen zugeschnitten sind.

Es gibt vielfältige Vorschläge für die Gestaltung solcher Transportwagen. Je umfangreicher das Programm ist, das mit diesen Transportwagen bewältigt werden soll, desto voluminöser werden diese Transportwagen im allgemeinen und desto weniger sind die einzelnen Geräte und Behälter ohne gegenseitige Störung zugänglich.

Aus der DE 94 02 552 U1 ist ein gattungsgemäßer Reinigungswagen bekannt. Vorteilhaft bei diesem Reinigungswagen ist die horizontal und vertikal zueinander versetzte Anordnung der Trägerelemente, die eine kaskadenförmige Anordnung der Behälter auf den Trägerelementen erlaubt. Andererseits ist das unterzubringende und zu transportierende Volumen sehr gering und der unter dem höher angeordneten Behälter vorhandene Raum nicht genutzt. Außerdem ist die durch die Konzeption bedingte Anbringung einer Presse sowohl aus statischen als auch aus ergonomischen Gesichtspunkten zu hoch. Nachteilig ist auch, daß der Schmutzeimer über dem Wisch(Frisch)wassereimer angeordnet sein muß, so daß eine Verschmutzung der Wischflotte durch Tropfwasser aus dem Schmutzeimer oder dem Mop unvermeidbar ist.

Der Erfindung liegt das technische Problem zugrunde, den gattungsgemäßen Reinigungswagen so weiterzuentwickeln, daß er die Möglichkeit zur Anordnung einer größeren Zahl von für Reinigungszwecke erforderlichen Behältern und Utensilien ermöglicht, eine Anordnung erlaubt, die eine gegenseitige Beeinflussung von Schmutz- und Sauberbereichen ausschließt und außerdem zusätzlich die Unterbringung von zu entsorgenden Wertstoffen unter gleichzeitiger Trennung in mehrere sortentypische Fraktionen ermöglicht.

Diese Aufgabe wird dadurch gelöst, daß auf dem Grundrahmen zumindest überwiegend eine Grundplatte befestigt ist, die Trägerelemente in den Stützrahmen kaskadenartig eingehängte Schalen sind und zwischen den eingehängten Schalen und der Grundplatte Raum zur Anordnung weiterer Behälter vorhanden ist.

Der vorgeschlagene Reinigungswagen schafft die Voraussetzung, den vorhandenen Raum optimal zu nutzen und bei guter Zugänglichkeit eine systematische Trennung der Bereiche auf und unter den Schalen und damit beispielsweise eine Trennung zwischen Schmutz- und Sauberbereichen durchzuführen. Außerdem ist durch die einhängbaren Schalen die Möglichkeit gegeben, durch Weglassen von Schalen an der entsprechenden Stelle zwischen den Stützrahmenstreben den Raum durchgängig bis zur Grundplatte mit Geräten oder Utensilien zu beschicken, die eine entsprechende Vertikalerstreckung haben. Eine Ausführungsform, bei der vor dem Stützrahmen auf der Bodenplatte ein Behälter abstellbar ist, kann an dieser Stelle vorteilhaft eine Wanne für die Waschflotte aufnehmen, ohne daß die Gefahr der Verschmutzung anderer Bereiche durch Tropfwasser besteht.

Bei der Realisierung mehrerer Stufen und der dadurch gegebenen Höhe der hinteren Stufen ist unterhalb der auf den höheren Stufen eingehängten Schale ein Spannrahmen mit Halteklammem für mindestens einen Müllsack vorgesehen, so daß das an dieser Stelle vorhandene größere Volumen zweckmäßig auch für die Unterbringung zu entsorgender voluminöser Stoffe genutzt werden kann. Besonders geeignet sind solche Müllsäcke als Transportbehältnis für Papierabfälle oder verschmutzte leichte Textilien. Die Räume unter den an niedrigerer Position eingehängten Schalen sind besonders geeignet für das Aufstellen von niedrigeren Behältern in entsprechender Abstufung für die erfahrungsgemäß in geringeren Mengen anfallenden allgemeinen Abfälle, Glasabfälle und Bioabfälle. In jedem Fall ist es vorteilhaft, wenn die verschiedenen Abfälle oder verschmutzten Materialien nach sortentypischen Fraktionen getrennt gehalten werden können, damit sie gezielt einer Behandlung oder Wiederverwendung zugeführt werden zu können.

In einer besonderen Ausführungsform ist der Stützrahmen modular aufgebaut. Dabei bilden die Stützrahmen mit jeweils zwei beidseitigen Stufenelementen die Module, die aus jeweils einer Horizontal- und einer Vertikalstrebe, die am vorderen Ende der Horizontalstrebe rechtwinklig nach unten gerichtet ist, bestehen. Außerdem sind zusätzlich zwei Vertikalstreben pro Stufe vorgesehen, die die Abstützverbindung zwischen dem hinteren Ende der Horizontalstreben jeder Stufe und dem Grundrahmen unter der Grundplatte darstellen. Dabei sind an allen Strebenenden Einsteck-/Festschraubverbindungen vorgesehen, so daß die Stufenelemente und die zusätzlichen Vertikalstreben jeweils in Anpassung an den Bedarf des spezifischen Einsatzzwecks in einfachster Weise zusammengestellt und montiert werden können. Dabei werden die zusätzlichen Vertikalstreben jeweils nur zwischen dem hinteren Ende der obersten Stufe und dem vorderen Ende der unteren Stufe als Abstützverbindung auf der Grundplatte montiert. Nur bei dem Transport besonders schwerer Gegenstände in den Schalen ist die Montage der zusätzlichen Vertikalstreben auch unter diesen Schalen erforderlich und möglich. Bei normaler Beladung bietet das Weglassen dieser Vertikalstreben zwischen der vordersten und der hintersten den Vorteil einer besseren Zugänglichkeit der unter den Schalen angeordneten Behälter.

In einer anderen Ausführungsform werden zumindest teilweise zwischen den Eckpunkten der beidseitigen Stufen sowie zwischen den hinteren Vertikalstreben Querstreben vorgesehen. Diese dienen der Stabilisierung der Stützrahmenkonstruktion und bieten Auflagemöglichkeit für Ränder an den Längsseiten der Schalen sowie beispielsweise für die Aufhängung des hinteren Einhängebehälters. Für den modulartigen Aufbau des Stützrahmens bilden die Stufen stabile und leicht zu handhabende Module.

In einer besonderen Ausführungsform ist der Stützrahmen auf einer Seite höher als auf der gegenüberliegenden Seite. Dabei können die Schalen derart ausgebildet sein, daß ihre Seitenwände vertikal und ihr Boden parallel zur Verbindungsebene der beiden gegenüberliegenden Stufen des Stützrahmens verlaufen. Durch diese Ausbildung sind die Schalen von der Seite des niedrigeren Stützrahmens her leicht einsehbar und bedienbar. Außerdem wird der Bedienungsperson einprägsam vorgegeben, daß diese niedriger Seite die Bedienseite für den Sauberbereich des Reinigungswagens darstellt, das heißt Unterbringungsmöglichkeit für neue oder gereinigte Gegenstände und Utensilien sowie Eignung für die Anordnung von Reinigungslösungen für Vertikalflächen und Sanitärbereiche in den Schalen.

Werden auf der niedrigeren Stützrahmenseite unterhalb der eingehängten Schalen Scharniere angeordnet, um die Klappen schwenkbar sind, wird diese Trennung von Rein- oder Sauberbereich und Schmutzbereich zusätzlich unterstrichen. Diese Klappen sind nur von der den Scharnieren gegenüberliegenden Seite bedienbar. Die Bedienungsperson kann diese Klappen also nur von der Seite mit dem höheren Stützrahmen her anheben, um die mit den Klappen abgedeckten Behälter für das Einwerfen der Abfallstoff zugänglich zu machen. Werden die Scharniere derart angeordnet, daß ihr Schwenkpunkt in seitlicher Orientierung unter dem Stützrahmen und in der Höhe gerade unterhalb des tiefsten Punkts der entsprechenden Schale liegt, hat die Schwenkbarkeit der Klappe um mindestens die doppelte Höhendifferenz der Stützrahmenseiten zur Folge, daß die unter den Schalen angeordneten Behälter und/oder Spannrahmen zur höheren Stützrahmenseite hin mindestens in dem Maße abschrägt sein müssen, wie die Schalen in der entgegengesetzten Richtung. Auch dies bewirkt wieder die gute Einsehbarkeit und Zugänglichkeit der auf der Grundplatte stehenden Behälter bzw. der am Spannrahmen befestigten Müllsäcke. Die lösbare Festlegung der Klappen in der unteren Schwenkposition durch eine Arretiervorrichtung verhindert in vorteilhafter Weise ein unbeabsichtigtes Anheben der Klappen oder ein weiteres Herunterschwenken der Klappen bei nicht aufgestelltem Behälter.

Eine Ausführungsform, bei der Grundrahmen und Grundplatte nach vorn verjüngt zulaufen und im hinteren mittleren Bereich einen Ausschnitt aufweisen, ermöglichen es, die Gerätewagen von hinten teilweise ineinanderzuschieben. Dazu muß der Ausschnitt derart bemessen sein, daß der vordere Teil des von hinten einzuschiebenden Reinigungswagens so weit in diesen Ausschnitt paßt, wie die Wagen ineinandergeschoben werden sollen. Dabei ist es sinnvoll, diesen Ausschnitt in Längsrichtung so weit zu führen, wie unter den Stufen Spannrahmen für die Aufhängung von Müllsäcken angeordnet sind, da in diesem Bereich die Bodenplatte normalerweise nicht zum Abstellen von Behältern benötigt wird. Dies hat zusätzlich den Vorteil, daß dies bei eingehängten leeren Müllsäcken ohne weiteres möglich ist, da sich die Müllsäcke durch den eingeschobenen Reinigungswagen nach vorn schieben lassen, ohne daß Ineinanderschieben der Wagen zu behindern.

Werden die Rollen als endständige Lenkrollen ausgeführt, wobei die mindestens eine vordere Rolle niedriger ist als die beiden hinteren Rollen, hat dies den Vorteil, daß der Schwerpunkt des Reinigungswagens sicher zwischen den Rollen liegt und Grundrahmen und die Grundplatte eine Neigung nach vorn aufweisen. Diese Ausführungsform bringt für die Ineinanderschiebbarkeit von Reinigungswagen den Vorteil, daß sich die Grundplatte des hinteren Wagens unter der Grundplatte des vorderen Wagens anordnet und der Ausschnitt nur so breit sein muß, wie die vorderen Vertikalstreben des Stützrahmens seitlich auseinanderstehen. Die Wahl von Lenkrollen bringt außerdem den Vorteil einer sehr guten Rangierbarkeit des Reinigungswagens. Die Anordnung von Führungsgriffen beidseitig des Einhängebehälters an den rückseitigen Vertikalstreben begünstigt eine sichere Steuerbarkeit des Reinigungswagens durch die Bedienungsperson. Die Anordnung einer Haltevorrichtung für ein in dem vorderen Behälter abstellbares Reinigungsgerät ermöglicht dessen Positionierung an der gewünschten und für die Zugänglichkeit am besten geeigneten Stelle.

Die erwähnten und weitere Vorteile werden anschaulich verdeutlicht bei der Beschreibung eines Ausführungsbeispiels, das in beigefügter Zeichnung dargestellt ist. Darin zeigt
- Fig. 1: die Vorderansicht eines vierstufigen, nach vorn verjüngten und geneigten Reinigungswagens mit unterschiedlich hohen Stützrahmenseiten;
- Fig. 2: die Draufsicht auf den Reinigungswagen gemäß Fig. 1, jedoch ohne eingehängte Schalen;
- Fig. 3: die Seitenansicht des Reinigungswagens gemäß Fig. 2;
- Fig.4: die Draufsicht auf eine in einer Stufe des Stützrahmens eingehängte Schale und
- Fig. 5: die Schnittansicht gemäß der Linie V-V in Fig. 4.

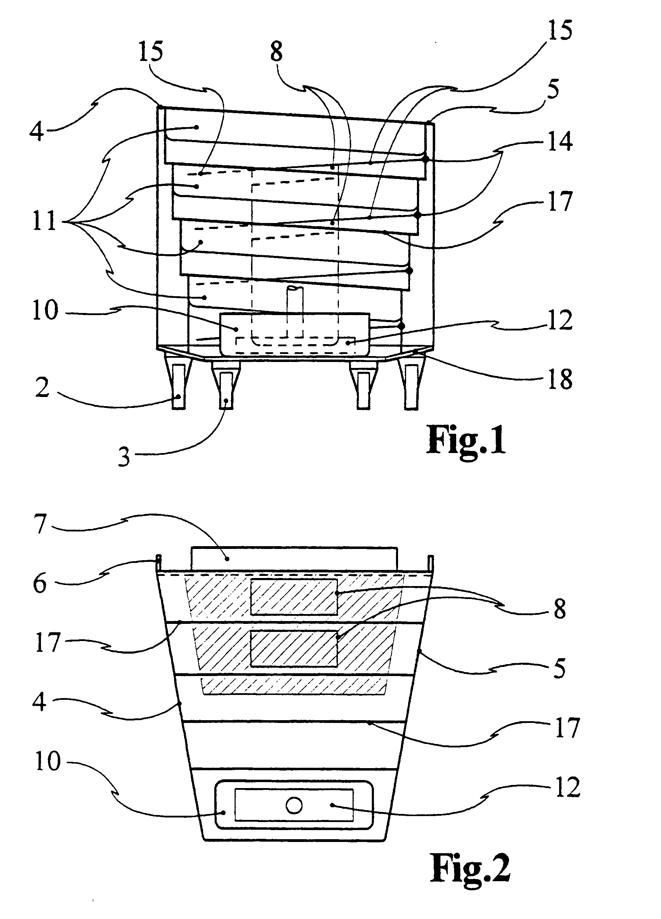

Das in der Zeichnung dargestellte Ausführungsbeispiel ist nach vorn verjüngt und geneigt und weist eine höhere Stützrahmenseite 4 und eine niedriger Stützrahmenseite 5 auf. Fig. 1 zeigt die Vorderansicht dieses Reinigungswagens mit eingehängten Schalen 11 und der auf vorderster Position der Grundplatte 18 aufstehenden Wanne 10. Deutlich zu erkennen sind die endständigen Lenkrollen, von denen die hinteren Lenkrollen 2 größer und damit höher sind als die vorderen Lenkrollen 3. Für bestimmte Einsatzfälle ist die Ausführung mit nur einer und dann mittig am vorderen Rand angeordneten Lenkrolle 3 zweckmäßig. Deutlich zu erkennen ist, daß der auf der linken Seite der Abbildung angeordnete Stützrahmen 4 höher ist als der rechte Stützrahmen 5. Unterhalb der beiden oberen Schalen 11 sind Klappen 15 angeordnet, die um Scharniere 14 schwenkbar sind. Diese Klappen/Scharnieranordnung 14, 15 kann unter jeder Stufe vorgesehen sein. in der Wanne 10 ist ein Reinigungsgerät 12 abgestellt.

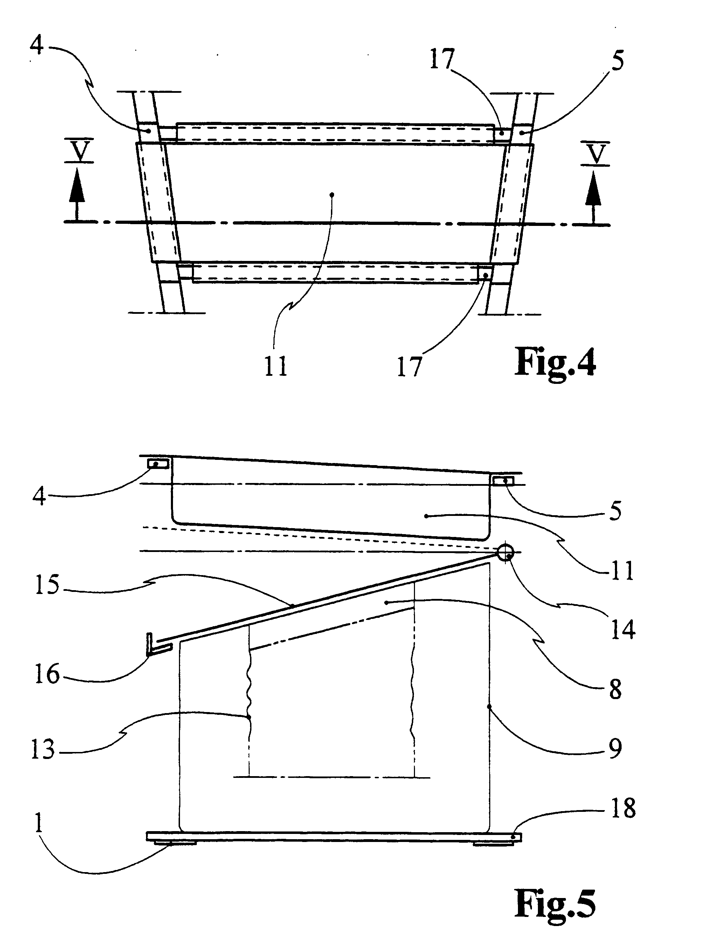

in der Darstellung der Fig. 1 wird deutlich erkennbar, daß durch die zur rechten Seite hin geneigte Anordnung der Schalen 11 und zur linken Seite 4 hin geneigten Klappen 15, mit denen die hier nicht dargestellten Behälter 9 abgedeckt werden können, eine eindeutige Zuordnung des Rein- oder Sauberbereichs mit der Zugänglichkeit von der rechten Seite und des Abfall- oder Schmutzbereichs mit der Zugänglichkeit von der linken Seite oder von vorn vorgibt. Diese klare systematische Trennung des Rein- und Schmutzbereichs hat auch ein disziplinarische Wirkung auf die Bedienungsperson. Von den abzudeckenden Behältern, die unterhalb der Schalen 11 angeordnet sind, sind in dieser Darstellung nur die unter den beiden höchsten Stufen angeordneten Spannrahmen 8 ausgeführt. Die Anordnung eines oben abgeschrägten Behälters 9 und seiner Abdeckung durch die Klappe 15 ist in Fig. 5 dargestellt und deutlich zu erkennen.

In Fig. 2 ist die Draufsicht auf den Reinigungswagen gemäß Fig. 1 dargestellt. Allerdings sind in dieser Darstellung die eingehängten Schalen 11 weggelassen. Deutlich zu erkennen ist die Positionierung der Spannrahmen 8 in der Mitte unter den beiden oberen Stufen. Die Spannrahmen 8 können auch weiter zur linken Seite mit dem höheren Stützrahmen 4 angeordnet sein, damit sie von der Seite 4 besser zugänglich sind. Jeweils zwischen dem vorderen und hinteren Ende der Horizontalstrebe jeder Stufe ist eine Querstrebe 17 angeordnet. Der Handhabungsstiel des Reinigungsgerätes 12 ist mit einer Haltevorrichtung zu fixieren, die an der vordersten Querstrebe 17 befestigt werden kann.

Im hinteren mittleren Bereich der Grundplatte 18 ist ein Ausschnitt schraffiert angedeutet, der es erlaubt, einen Reinigungswagen von hinten bis etwa zur Mitte in den vorderen Reinigungswagen hineinzuschieben. Am hinteren Ende des Reinigungswagens sind die Führungsgriffe 6 beidseitig neben dem Einhängebehälter 7 zu erkennen. Der Ausschnitt kann durch einen Deckel geschlossen werden, wenn diese Fläche zusätzlich zum Abstellen von Behältern oder Geräten benötigt wird.

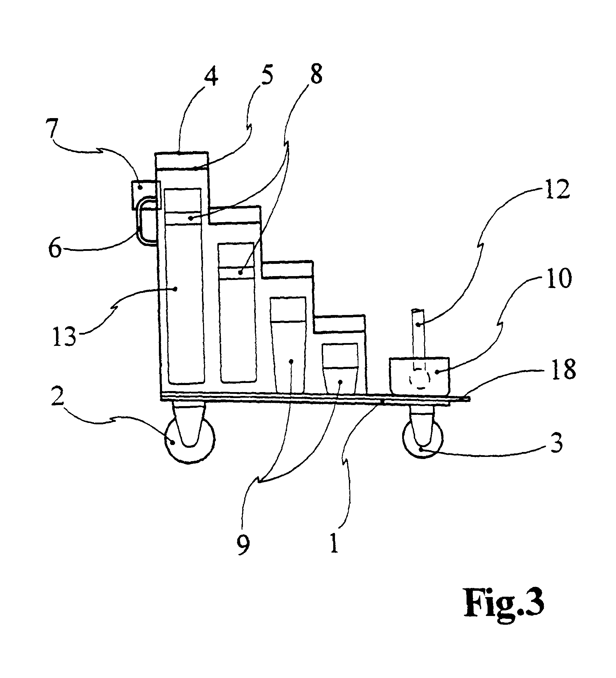

Fig. 3 zeigt den Reinigungswagen in der Ansicht von der Seite, auf der der höhere Stützrahmen 4 befestigt ist. Es ist deutlich zu erkennen, daß unter der obersten Stufe der Spannrahmen 8 so hoch angeordnet ist, daß ein sehr langer Müllsack daran aufgespannt und befestigt werden kann. Unterhalb der Grundplatte 18 ist der Grundrahmen 1 zu erkennen. Die Behälter 9 mit zur Betrachtungsebene hin geneigten Öffnungen sind von dieser Seite gut zugänglich, wenn die hier nicht dargestellten Klappen 15 angehoben werden. In dem Behälter 9, der für Biomüll vorgesehen ist, kann zweckmäßig ein Einsatz aus verrottbarem Material angeordnet werden. Das erleichtert die Entleerung und die Sauberhaltung des Behälters 9.

In der Draufsicht des Ausschnitts, der in Fig. 4 dargestellt ist, ist die eingehängte Schale 11 deutlich zu erkennen. Sie verfügt allseits über überstehende Ränder, mit denen sie auf den Streben der Stützrahmen 4 und 5 sowie auf den Querstreben 17 aufliegt. Diese Ausführung einer nach vorn verjüngten Schale 11 ist für die Aufnahme schwerer Materialien und Geräte besonders geeignet.

Fig. 5 zeigt die geschnittene Seitenansicht gemäß V-V in Fig. 4. Hierin ist deutlich die Ausbildung der Schale 11 zu erkennen, die mit ihren seitlichen Rändern auf den Horizontalstreben des Stützrahmens 4 und 5 aufliegt. In der Darstellung weisen die Streben ein Rechteckprofil auf. Sie können jedoch auch aus runden oder quadratischen Hohlprofilen bestehen. Unterhalb der Schale 11 ist in der seitlichen Ausrichtung unter dem Stützrahmen 5 ein Scharnier 14 angeordnet, um das eine Klappe 15 schwenkbar ist. Im dargestellten Ausführungsbeispiel ist das Scharnier mit seinem Schwenkpunkt in der Höhe angeordnet, in der die Klappe 15 in oberster Schwenkstellung genau parallel zum Boden der Schale 11 und in unterer Schwenkstellung parallel zum oberen Rand des nach links abgeschrägten Behälters 9 bzw. des Spannrahmens 8 verläuft. In unterster Schwenkstellung wird die Klappe 15 durch die Arretiervorrichtung 16 lösbar festgelegt.

Der Behälter 9 ist auf der Grundplatte 18 aufgestellt, die auf dem Grundrahmen 1 befestigt ist. Die durch strich-doppelpunktierte Linie angedeuteten Spannrahmen 8 und Müllsack 13 zeigen, wie diese in entsprechender Weise unter den Schalen 11 der höheren Stufen angeordnet würden, wenn der Abstand zwischen Klappe 15 und Grundplatte 18 entsprechend groß ist. Eine niedrigere Anordnung des Scharniers 14 und/oder eine stärkere Abschrägung der Oberkante des Behälters 9 erlaubt eine entsprechend höhere Schwenkbarkeit der Klappe 15 und damit eine größere Öffnung für den Zugang zu den Behältern 9 und 13.

## Patentansprüche

1. Reinigungswagen zur Aufnahme und Beförderung von Behältern und Utensilien für Reinigungs-, Ver- und Entsorgungszwecke, mit einem auf Rollen (2, 3) befestigten Grundrahmen (1) und darauf angeordnetem stufenförmigen Stützrahmen (4, 5) für horizontal und vertikal zueinander versetzte Trägerelemente (11) und einem hinter dem Stützrahmen (4, 5) angeordneten Einhängebehälter (7),
**dadurch gekennzeichnet, daß**
auf dem Grundrahmen (1) zumindest überwiegend eine Grundplatte (18) befestigt ist, die Trägerelemente in den Stützrahmen (4, 5) kaskadenartig eingehängte Schalen (11) sind und zwischen den eingehängten Schalen (11) und der Grundplatte (18) Raum zur Anordnung weiterer Behälter (9, 13) vorhanden ist.

2. Reinigungswagen gemäß Anspruch 1, **dadurch gekennzeichnet, daß** der Stützrahmen (4, 5) mehr als zwei Stufen aufweist und vor dem Stützrahmen (4, 5) sowie zumindest unter einer eingehängten Schale (11) auf der Bodenplatte (18) Behälter (9, 10) abstellbar sind.

3. Reinigungswagen gemäß Anspruch 1 oder 2, **dadurch gekennzeichnet, daß** mindestens unter einer der an höherer Position eingehängten Schale (11) Spannrahmen (8) mit Halteklammern für mindestens einen Müllsack (13) angebracht sind.

4. Reinigungswagen gemäß einem der Ansprüche 1 bis 3, **dadurch gekennzeichnet, daß** der Stützrahmen (4, 5) derart modular aufgebaut ist, daß jeweils beidseitig eine Stützrahmenstufe als Modul mit horizontaler und vorderer vertikaler nach unten gerichteter Strebe ausgebildet und zusätzlich zwei Vertikalstreben pro Stufe vorgesehen sind, die die Abstützverbindung zwischen dem hinteren Ende der Horizontalstreben jeder Stufe und dem Grundrahmen (1) oder der Grundplatte (18) darstellen, wobei an allen Strebenenden Einsteck/Festschraubverbindungen vorgesehen sind und mindestens zwischen dem hinteren Ende der hinteren Stufe und dem vorderen Ende der vordersten Stufe eine Abstützverbindung auf den Grundrahmen (1) oder die Grundplatte (18) montiert ist.

5. Reinigungswagen gemäß einem der Ansprüche 1 bis 4, **dadurch gekennzeichnet, daß** zumindest teilweise zwischen den Eckpunkten der Stufen auf beiden Seiten und zwischen den hinteren Vertikalstreben Querstreben (17) vorgesehen sind.

6. Reinigungswagen gemäß einem der Ansprüche 1 bis 5, **dadurch gekennzeichnet, daß** der Stützrahmen (4, 5) auf einer Seite (4) höher ist als auf der gegenüberliegenden Seite (5) und die Schalen (11) derart ausgebildet sind, daß ihre Seitenwände vertikal und ihr Boden parallel zur Verbindungsebene der beiden gegenüberliegenden Stufen des Stützrahmens (4, 5) verlaufen.

7. Reinigungswagen gemäß Anspruch 6, **dadurch gekennzeichnet, daß** unterhalb der eingehängten Schalen (11) auf der niedrigeren Stützrahmenseite (5) Scharniere (14) angeordnet sind, um die Klappen (15) über eine Höhe schwenkbar sind, die auf der dem Scharnier (14) gegenüberliegenden Seite (4) mindestens der doppelten Höhendifferenz der Stützrahmenseiten (4, 5) entspricht und die Klappen (15) in ihrer unteren Schwenkposition parallel zum oberen Rand der darunter angeordneten Behälter (9) und/oder Spannrahmen (8) verlaufen und auf diesen verschließend aufliegen.

8. Reinigungswagen gemäß Anspruch 7, **dadurch gekennzeichnet, daß** die Klappen (15) in der unteren Schwenkposition durch eine Arretiervorrichtung (16) lösbar festgelegt sind.

9. Reinigungswagen gemäß einem der Ansprüche 1 bis 8, **dadurch gekennzeichnet, daß** der Grundrahmen (1) und die Grundplatte (18) nach vorne verjüngt zulaufen und im hinteren mittleren Bereich einen derart bemessenen Ausschnitt aufweisen, daß ein Gerätewagen von hinten jeweils teilweise in einen vorderen Gerätewagen einschiebbar ist, wobei der Stützrahmen (4, 5) beidseitig in der Nähe des äußeren seitlichen Randes des Grundrahmens (1) oder der Grundplatte (18) angeordnet ist

10. Reinigungswagen gemäß einem der Ansprüche 1 bis 9, **dadurch gekennzeichnet, daß** die Rollen (2, 3) endständige Lenkrollen sind und die mindestens eine vordere (3) niedriger als die beiden hinteren Lenkrollen (2) ist.

11. Reinigungswagen gemäß einem der vorstehenden Ansprüche, **dadurch gekennzeichnet, daß** an den rückseitigen Vertikalstreben des Stützrahmens (4, 5) Führungsgriffe (6) beidseitig des Einhängebehälters (7) befestigt sind.

12. Reinigungswagen gemäß einem der vorstehenden Ansprüche, **dadurch gekennzeichnet, daß** an der vorderen Querstrebe (17) zwischen den beiden Stützrahmenseiten (4, 5) eine Haltevorrichtung für ein in dem vordersten Behälter (10) abstellbares Reinigungsgerät (12) angebracht ist.

## Claims

1. A cleaning trolley for collecting and carrying containers and utensils for cleaning, supply and disposal purposes comprising a base frame (1) mounted on wheels (2,3) and, disposed thereon, a step-like support frame (4,5) for carrier elements (11) horizontally and vertically offset from one another and a suspended container (7) located behind the support frame (4,5), **characterized in that** a base plate (18) is fixed at least predominantly to the, base frame (1), the carrier elements are trays (11) designed to be suspended in a cascade in the support frame (4,5) and space for accommodating further containers (9,13) is available between the suspended trays (11) and the base plate (18).

2. A cleaning trolley as claimed in claim 1, **characterized in that** the support frame (4,5) has more than two steps and containers (9,10) are designed to be set down on the base plate (11) in front of the support frame (4,5) and at least beneath a suspended tray (11).

3. A cleaning trolley as claimed in claim 1 or 2, **characterized in that** a stretching frame (8) with clips for holding at least one refuse sack (13) is provided at least below a tray (11) suspended in a higher position.

4. A cleaning trolley as claimed in any of claims 1 to 3, **characterized in that** the support frame (4,5) has a modular construction so that a support frame step is formed on both sides as a module with a horizontal strut and a front strut directed vertically downwards and two vertical struts per step are additionally provided and form the supporting connection between the rear end of the horizontal struts of each step and the base frame (1) or the base plate (18), push-in/screw connections being provided at the ends of all struts and a supporting connection being mounted on the base frame (1) or the base plate (18) at least between the rear end of the rear step and the front end of the frontmost step.

5. A cleaning trolley as claimed in any of claims 1 to 4, **characterized in that** transverse struts (17) are provided at least between the comers of the steps on both sides and between the rear vertical struts.

6. A cleaning trolley as claimed in any of claims 1 to 5, **characterized in that** the support frame (4,5) is higher on one side (4) than on the opposite side (5) and the trays (11) are designed in such a way that their side walls extend vertically and their base parallel to the connecting plane of the two opposite steps of support frame (4,5).

7. A cleaning trolley as claimed in claim 6, **characterized in that** disposed beneath the suspended trays (11) on the lower side (5) of the support frame are hinges (14) about which flaps (15) are designed to pivot by a height which - on the side (4) opposite the hinge (14) - corresponds to at least twice the difference in height between the sides (4,5) of the support frame and, in their lower position, the flaps (15) run parallel to the upper edge of the underlying container (9) and/or stretching frame (8) and rest thereon, closing the container (9) and/or stretching frame (8).

8. A cleaning trolley as claimed in claim 7, **characterized in that** the flaps (15) are releasably secured in their lower position by a locking mechanism (16).

9. A cleaning trolley as claimed in any of claims 1 to 8, **characterized in that** the base frame (1) and the base plate (18) taper frontwards and, in their rear central region, have a recess of such dimensions that one trolley can be pushed from behind into a front trolley, the support frame (4,5) being arranged on both sides in the vicinity of the outer lateral edge of the base frame (1) or the base plate (18).

10. A cleaning trolley as claimed in any of claims 1 to 9, **characterized in that** the wheels (2,3) are comer castor wheels and the at least one front castor (3) is lower than the two rear castors (2).

11. A cleaning trolley as claimed in any of the preceding claims, **characterized in that** guide handles (6) are fixed to the rear vertical struts of the support frame (4,5) on both sides of the suspended container (7).

12. A cleaning trolley as claimed in any of the preceding claims, **characterized in that** a holder for a cleaning utensil (12) designed to be placed in the frontmost container (10) is fixed to the front transverse strut (17) between the two sides (4,5) of the support frame.

## Revendications

1. Chariot de nettoyage pour le rangement et le transport de récipients et ustensiles pour le nettoyage, l'approvisionnement et l'évacuation, comportant un cadre de base (1) monté sur roues (2, 3) et des cadres de support (4, 5) étagés disposés sur celui-ci pour des éléments de support (11) décalés horizontalement et verticalement l'un par rapport à l'autre et un récipient à accrocher (7) disposé derrière le cadre de support (4, 5), **caractérisé en ce qu'**une plaque de base (18) est fixée de manière au moins prépondérante sur le cadre de base (1), les éléments de support sont des cuvettes (11) accrochées en cascade dans le cadre de support (4, 5) et qu'un espace de rangement d'autres récipients (9, 13) est disponible entre les cuvettes (11) accrochées et la plaque de base (18).

2. Chariot de nettoyage suivant la revendication 1, **caractérisé en ce que** le cadre de support (4, 5) présente plus de deux étages et que des récipients (9, 10) peuvent être déposés sur la plaque de sol (18) devant le cadre de support (4, 5) ainsi qu'au moins en dessous d'une cuvette (11) accrochée.

3. Chariot de nettoyage suivant la revendication 1 ou 2, **caractérisé en ce qu'**au moins en dessous d'une des cuvettes (11) accrochées en position supérieure sont disposés des cadres de serrage (8) avec des pinces de retenue pour au moins un sac poubelle (13).

4. Chariot de nettoyage suivant l'une des revendications 1 à 3, **caractérisé en ce que** le cadre de support (4, 5) est de construction modulaire telle que chaque étage du cadre de support est formé des deux côtés comme module avec montants horizontaux et verticaux avant orientés vers le bas et en plus deux montants verticaux sont prévus par étage, qui représentent la liaison d'appui entre l'extrémité arrière des montants horizontaux de chaque étage et le cadre de base (1) ou la plaque de base (18), des liaisons par emboîtement/vissage étant prévues à toutes les extrémités de montants et au moins entre l'extrémité arrière de l'étage arrière et l'extrémité avant de l'étage avant une liaison d'appui est montée sur le cadre de base (1) ou sur la plaque de base (18).

5. Chariot de nettoyage suivant l'une des revendications 1 à 4, **caractérisé en ce que** des montants transversaux (17) sont au moins partiellement placés entre les coins des étages des deux côtés ainsi qu'entre les montants verticaux arrières.

6. Chariot de nettoyage suivant l'une des revendications 1 à 5, **caractérisé en ce que** le cadre de support (4, 5) est plus haut d'un côté (4) que du côté opposé (5) et les cuvettes (11) sont construites de telle façon que leurs parois latérales s'étendent verticalement et leur fond parallèlement au plan de liaison des deux étages opposés du cadre de support (4, 5).

7. Chariot de nettoyage suivant la revendication 6, **caractérisé en ce que** des charnières (14) sont disposées en dessous des cuvettes (11) accrochées du côté le plus bas (5) du cadre de support, autour desquelles des abattants (15) peuvent pivoter sur une hauteur qui, du côté (4) opposé à la charnière (14), correspond au moins au double de la différence de hauteur entre les côtés du cadre de support (4, 5) et les abattants (15) s'étendent dans leur position inférieure de pivotement parallèlement au bord supérieur des récipients (9) et/ou cadres de serrage (8) disposés en dessous et reposent à fermeture sur ceux-ci.

8. Chariot de nettoyage suivant la revendication 7, **caractérisé en ce que** les abattants (15) sont fixés de manière amovible dans la position inférieure de pivotement par un dispositif de blocage (16).

9. Chariot de nettoyage suivant l'une des revendications 1 à 8, **caractérisé en ce que** le cadre de base (1) et la plaque de base (18) se rétrécissent vers l'avant et dans leur partie centrale arrière présentent une découpe de dimensions telles qu'un chariot d'appareil peut être emboîté par l'arrière partiellement dans un chariot d'appareil avant, le cadre de support (4, 5) étant disposé des deux côtés à proximité du bord latéral extérieur du cadre de base (1) ou de la plaque de base (18)

10. Chariot de nettoyage suivant l'une des revendications 1 à 9, **caractérisé en ce que** les roues (2, 3) sont des roues de guidage terminales et la ou les roues avant (3) sont plus basses que les deux roues de guidage arrières (2).

11. Chariot de nettoyage suivant l'une des revendications précédentes, **caractérisé en ce que** des poignées de guidage (6) sont fixées des deux côtés du récipient à accrocher (7) aux montants verticaux arrières du cadre de support (4, 5).

12. Chariot de nettoyage suivant l'une des revendications précédentes, **caractérisé en ce qu'**un dispositif de blocage pour un appareil de nettoyage (12) pouvant être déposé dans le récipient avant (10) est disposé au montant transversal avant (17) entre les deux côtés du cadre de support (4, 5).
